# EUROPEAN PATENT APPLICATION

(11) **EP 4 745 308 A1**
(43) Date of publication of application: **20.05.2026**
(21) Application number: 24879558.5
(22) Date of filing: 01.10.2024
(51) Int. Cl.: E02F 9/00, B60K 11/06

(54) **WORK MACHINE**

(30) Priority: 19.10.2023 JP 2023180572
(71) Applicant: KOBELCO CONSTRUCTION MACHINERY CO., LTD., Hiroshima-shi, Hiroshima 731-5161 (JP)
(72) Inventor: HAYASHI, Hideki, Hiroshima-shi, Hiroshima 731-5161 (JP); KIMURA, Yasumasa, Hiroshima-shi, Hiroshima 731-5161 (JP); OMORI, Atsushi, Hiroshima-shi, Hiroshima 731-5161 (JP)
(74) Representative: TBK
(86) International application number: PCT/JP2024/035163
(87) International publication number: WO 2025/084132

(57) **Abstract**

A working machine (10) includes: a cooling fan (20); an engine (30); a heat exchanger (40) disposed between an air intake division (81) and an engine division (82); and an air intake guide (50) that guides air flowing into the air intake division (81) through an inlet (71) to the heat exchanger (40). The air intake guide (50) has a heat exchanger-side upper wall (52) and an inlet-side upper wall (51). The heat exchanger-side upper wall (52) is located upstream of the heat exchanger (40) in airflow (AF), and extends obliquely downward from an upper end (41) of the heat exchanger (40) or from a member (90) connected to the upper end (41) to a lower position than the upper end (41). The inlet-side upper wall (51) extends obliquely upward from a lower end (52A) of the heat exchanger-side upper wall (52) toward the inlet (71).

## Description

### Technical Field

The present disclosure relates to a working machine, such as a hydraulic excavator.

### Background Art

Patent Literature 1 discloses a working machine including: an engine located in an engine chamber; a heat exchanger, such as a radiator, that cools the engine; and a cooling fan that generates airflow to advance from an inlet to the heat exchanger.

An engine sound generated from the engine located in the engine chamber passes through the heat exchanger and leaks to an outside of an upper slewing body through the inlet. Reduction in the engine sound leaking to the outside through the inlet is thus desired. The invention described in Patent Literature 1 allows noise, such as the engine sound, to be released upward through the inlet located at an upper surface of an outer wall. This achieves reduction in the noise that a person who is near the working machine feels. Unfortunately, a foreign matter, such as rainwater or dust, may enter a machine chamber through the inlet at the upper surface of the outer wall. This leads to a burden of cleaning the machine chamber. The invention described in Patent Literature 1 accordingly still needs improvement.

### Citation List

### Patent Literature

Patent Literature 1: Japanese Patent Publication No. 4506665

### Summary of Invention

The present disclosure has an object of providing a working machine that is configured to prevent a foreign matter from entering an air intake division while reducing noise attributed to an engine sound passing through a heat exchanger and leaking to an outside through an inlet.

A working machine according to a first aspect includes: a cooling fan that generates airflow to advance in order of an inlet, an air intake division, and an engine division; an engine located in the engine division; a heat exchanger disposed between the air intake division and the engine division; and an air intake guide that guides air entering the air intake division through the inlet to the heat exchanger. The air intake guide has a heat exchanger-side upper wall and an inlet-side upper wall. The heat exchanger-side upper wall is located upstream of the heat exchanger in the airflow, and extends obliquely downward from an upper end of the heat exchanger or from a member connected to the upper end to a lower position than the upper end. The inlet-side upper wall extends obliquely upward from a lower end of the heat exchanger-side upper wall toward the inlet.

### Brief Description of Drawings

Fig. 1 is a side view of an example working machine according to an embodiment.
Fig. 2 is a perspective view of an upper slewing body of the working machine seen from obliquely rear left.
Fig. 3 is a plan view of an inside of a machine chamber of the upper slewing body.
Fig. 4 is a perspective view of the inside of the machine chamber.
Fig. 5 is a cross-sectional view taken along the line A-A in Fig. 1.
Fig. 6 is a cross-sectional view of a working machine according to a modification of the embodiment, and correspond to the cross-sectional view taken along the line A-A in Fig. 1.

### Description of Embodiments

Hereinafter, an embodiment of the disclosure will be described with reference to the accompanying drawings.

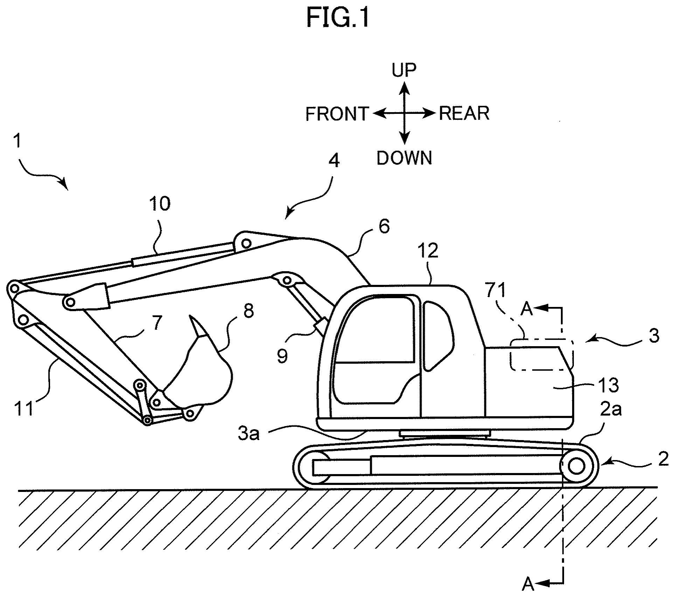

As illustrated in Fig. 1, a working machine 1 includes a lower traveling body 2 having a traveling device, an upper slewing body 3 supported on the lower traveling body 2 and configured to slew about a slewing axis extending upward and downward with respect to the lower traveling body 2, and a working device 4 supported on the upper slewing body 3. The working machine 1 according to the embodiment is a hydraulic excavator. However, a working machine in the present disclosure may be another working machine, such as a crane, a bulldozer, or other machine without limitation to the hydraulic excavator. The traveling device may be a crawler traveling device 2a illustrated in Fig. 1, or may be another traveling device having a tire (not shown).

The working device 4 includes a boom 6 attached to the upper slewing body 3 in a tiltable manner, an arm 7 rotatably attached to the boom 6, and a leading end attachment 8 rotatably attached to the arm 7. The leading end attachment 8 is a bucket in the embodiment. However, the leading end attachment may be another leading end attachment, e.g., a grapple, a fork, or a crusher.

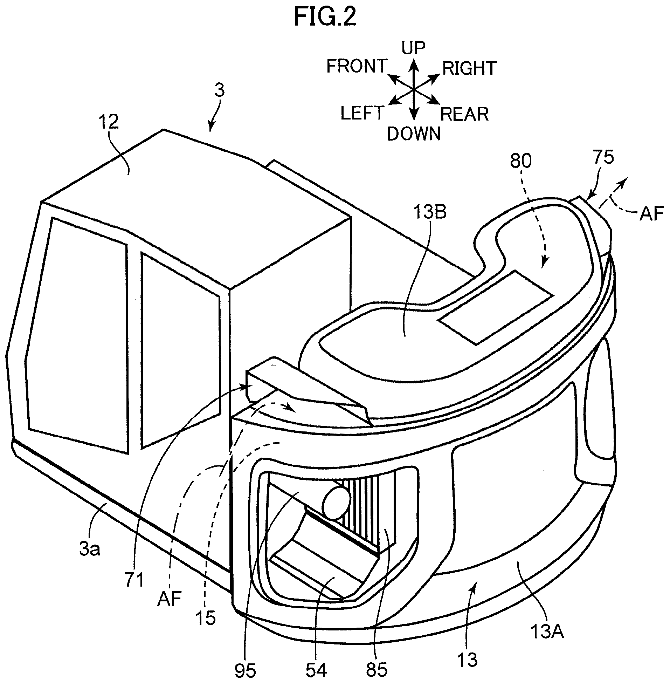

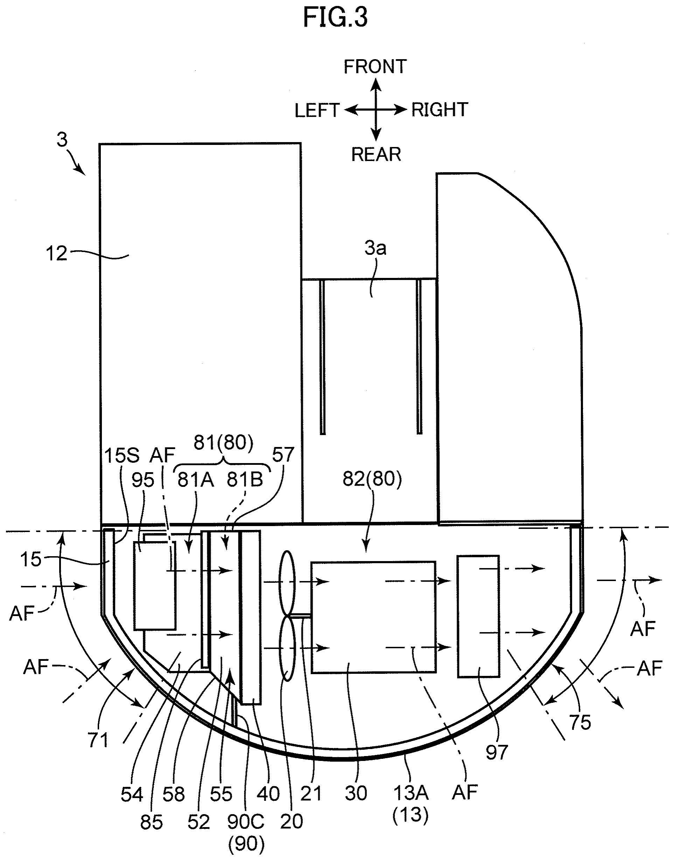

The upper slewing body 3 includes a slewing frame 3a, a cab 12 supported on the slewing frame 3a, and an outer wall 13 located in the rear of the cab 12. The outer wall 13 has, for example, a box shape, and defines a machine chamber 80. The machine chamber 80 will be described in detail later. As shown in Fig. 2 and Fig. 3, the cab 12 is located on a front left portion of the slewing frame 3a. An operator seat, a manipulation lever, a manipulation pedal, and other parts are arranged in the cab 12. A counterweight 15 is located at a rear portion of the upper slewing body 3. The counterweight 15 is a weight to keep balance. Although Fig. 2 illustrates a state where a part of the outer wall 13 located at a rear left portion of the upper slewing body 3 is removed, this part is actually closed in the working machine 1.

The working machine 1 includes a plurality of actuators. Each of the actuators is activated by receiving supply of hydraulic fluid discharged from a hydraulic pump 98. The actuators include a boom cylinder 9 for raising and lowering the boom 6, an arm cylinder 10 for rotating the arm 7, a leading end attachment cylinder 11 for rotating the leading end attachment 8, and an unillustrated hydraulic motor to make the upper slewing body 3 slew with respect to the lower traveling body 2.

The upper slewing body 3 of the working machine 1 has the machine chamber 80 surrounded by the outer wall 13. In a specific example in Fig. 2 and Fig. 3, the machine chamber 80 is located in the rear of the cab 12, but may be, for example, located on a certain side (right side) of the cab 12, or may be located in the rear of and on the side of the cab 12. For instance, as illustrated in Fig. 2, the outer wall 13 includes a side wall part 13A that covers the machine chamber 80 from the sides, and a top wall part 13B that covers the machine chamber 80 from above.

The upper slewing body 3 has an inlet 71 and an outlet 75. The inlet 71 is an opening for taking air or outside air on the outside of the machine chamber 80 into an inside of the machine chamber 80 as cooling air. The outlet 75 is an opening for discharging air in the inside of the machine chamber 80 to the outside of the machine chamber 80. Each of the inlet 71 and the outlet 75 may be located at the outer wall 13. Although the inlet 71 is located at the rear left portion of the upper slewing body 3, and the outlet 75 is located at a rear right portion of the upper slewing body 3 in the embodiment, the inlet 71 may be located at the rear right portion of the upper slewing body 3, and the outlet 75 may be located at the rear left portion of the upper slewing body 3. Alternatively, each of the inlet 71 and the outlet 75 may be located at another portion of the upper slewing body 3. In the embodiment, the outlet 75A is also located in an upper part of an engine division 82.

The machine chamber 80 includes an air intake division 81 and the engine division 82. In the embodiment, the inlet 71, the air intake division 81, the engine division 82, and the outlet 75 align in this order in a left-right direction in a top view as shown in Fig. 3.

Hereinafter, features of the working machine 1 according to the embodiment will be described.

### [First Feature]

The working machine 1 includes a cooling fan 20, an engine 30, a heat exchanger 40, and an air intake guide 50. The cooling fan 20 generates airflow AF to advance in order of the inlet 71, the air intake division 81, and the engine division 82. The heat exchanger 40 is disposed between the air intake division 81 and the engine division 82. The air intake guide 50 guides air flowing into the air intake division 81 through the inlet 71 to the heat exchanger 40. As shown in Fig. 3, the inlet 71, the heat exchanger 40, and the engine 30 align in this order in the left-right direction (which is an example of "one direction") in a top view. The engine 30 drives the hydraulic pump 98.

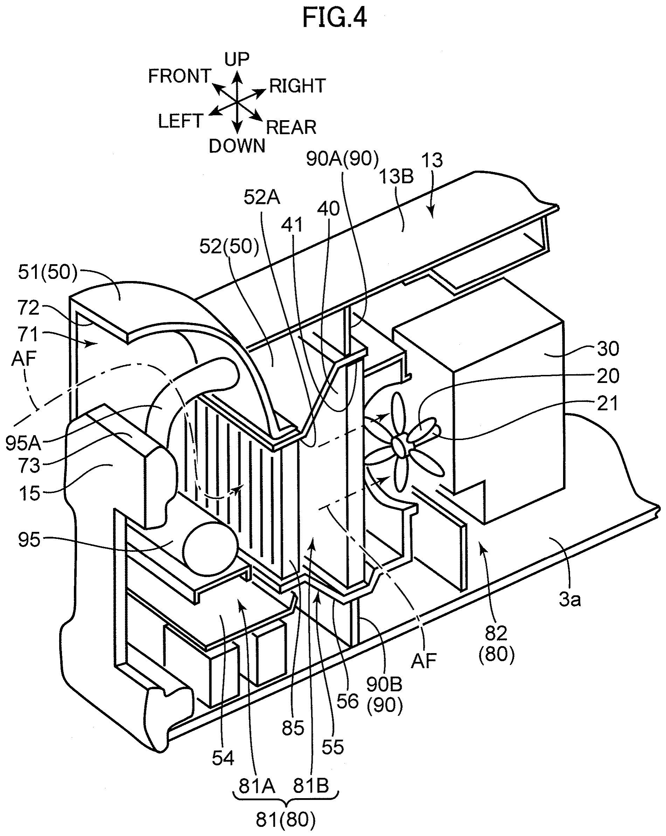

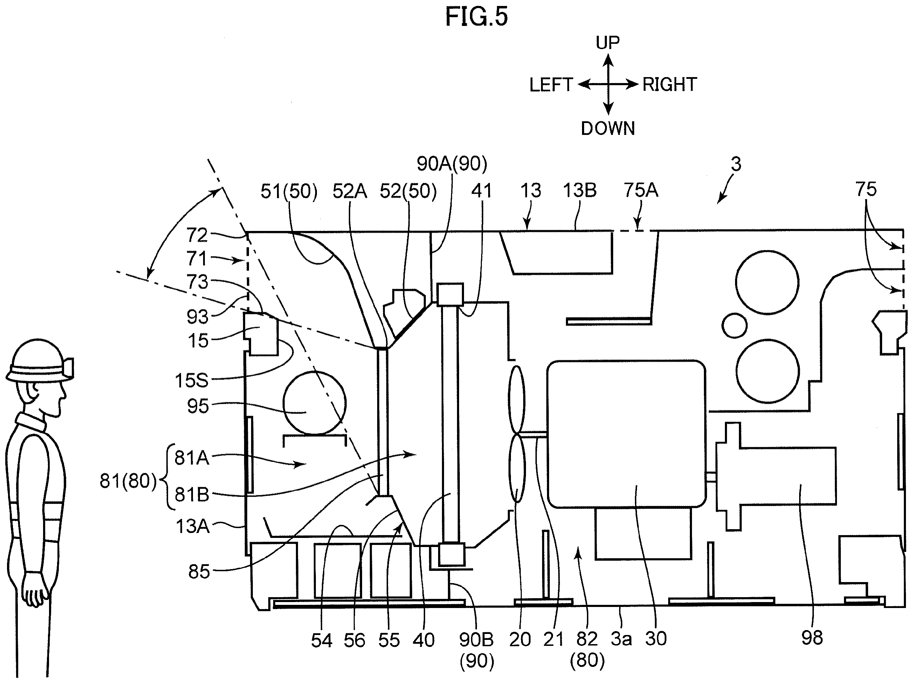

As shown in Fig. 4 and Fig. 5, the air intake guide 50 has a heat exchanger-side upper wall 52 and an inlet-side upper wall 51.

The heat exchanger-side upper wall 52 is located upstream of the heat exchanger 40 in the airflow AF. The heat exchanger-side upper wall 52 extends obliquely downward and toward the inlet-side upper wall 51 from an upper end 41 of the heat exchanger 40 to a lower position than the upper end 41 of the heat exchanger 40.

The inlet-side upper wall 51 extends obliquely upward from a lower end 52A of the heat exchanger-side upper wall 52 toward the inlet 71. The inlet-side upper wall 51 extends obliquely upward from the lower end 52A of the heat exchanger-side upper wall 52 toward the inlet 71 while curving in a bow shape.

The inlet-side upper wall 51 and the heat exchanger-side upper wall 52 constitute an upper wall having an intermediate portion between an upstream end of the inlet-side upper wall 51 and a downstream end of the heat exchanger-side upper wall 52, the intermediate portion having such a shape as to protrude downward to a lower position than the upper end 41 of the heat exchanger 40. In other words, the upper wall has an upper surface having a recess recessing downward.

In the working machine 1 having the first feature, the heat exchanger-side upper wall 52 and the inlet-side upper wall 51 are disposed between the upper part of the heat exchanger 40 and the inlet 71 as shown in Fig. 5. In this configuration, the heat exchanger-side upper wall 52 and the inlet-side upper wall 51 reduce an engine sound passing through an upper part of the heat exchanger 40. The air intake guide 50 has the inlet-side upper wall 51 as well as the heat exchanger-side upper wall 52. Thus, the configuration more reliably prevents a foreign matter, such as rainwater or dust, from entering the air intake division 81 than a configuration in which a region corresponding to the inlet-side upper wall 51 is opened upward. This consequently makes it possible to prevent a foreign matter from entering the air intake division 81 while reducing noise attributed to an engine sound passing through the heat exchanger 40 and leaking to the outside through the inlet 71. Besides, the inlet-side upper wall 51 and the heat exchanger-side upper wall 52 smoothly guide the air flowing into the air intake division 81 through the inlet 71 to the heat exchanger 40.

### [Second Feature]

In the working machine 1 having the second feature, the inlet-side upper wall 51 is continuous from the lower end 52A of the heat exchanger-side upper wall 52 to an upper end 72 of the inlet 71. In this configuration, as shown in Fig. 4 and Fig. 5, the inlet-side upper wall 51 and the heat exchanger-side upper wall 52 can cover the air intake division 81 from above in an extent from the heat exchanger 40 to the inlet 71, resulting in achievement in effectively preventing a foreign manner, such as rainwater or dust, from entering the air intake division 81.

### [Third Feature]

In the working machine 1 having the third feature, as shown in Fig. 4 and Fig. 5, the inlet 71 is located at only a side part of the air intake division 81. This configuration can more effectively prevent a foreign matter, such as rainwater or dust, from entering the air intake division 81.

As shown in Fig. 3, the counterweight 15 of the upper slewing body 3 surrounds a rear portion of the machine chamber 80. As shown in Fig. 4 and Fig. 5, a part of the counterweight 15 defines a lower part of the inlet 71. As shown in Fig. 4 and Fig. 5, the counterweight 15 has a thickness which is greater than a thickness of a side wall part 13A of the outer wall 13 in a direction of the airflow AF. Then, the inlet-side upper wall 51 has an upstream end (which is an upstream end in a direction of the airflow AF) that defines an upper part of the inlet 71. As shown in Fig. 4 and Fig. 5, the upstream end of the inlet-side upper wall 51 is at a position corresponding to the upper end 72 of the inlet 71. As shown in Fig. 5, the counterweight 15 has an inner surface 15S at an inner position than the upstream end of the inlet-side upper wall 51 in the left-right direction. In other words, the inner surface 15S of the counterweight 15 is located in the inside of the air intake division 81 (in an inside of a first air intake subdivision 81A to be described later). This configuration can more effectively prevent a foreign matter, such as rainwater or dust, from entering the air intake division 81.

### [Fourth Feature]

In the working machine 1 having the fourth feature, as shown in Fig. 5, the lower end 52A of the heat exchanger-side upper wall 52 is located at a lower position than a lower end 73 of the inlet 71. As shown in Fig. 5, this configuration allows an engine sound leaking out to the outside through the inlet 71 to advance obliquely upward, and hence achieves reduction in noise that a person who is near the working machine 1 feels. In Fig. 5, an extent defined by a straight dash-dotted line connecting the lower end 52A (corresponding to an upper end of an upstream opening of a duct 55 in the airflow AF) of the heat exchanger-side upper wall 52 and the lower end 73 of the inlet 71 to each other and by a straight dash-dotted line connecting a lower end of the upstream opening of the duct 55 in the airflow AF and the upper end 72 of the inlet 71 indicates an extent of a sound or direct sound linearly transmitted from the duct 55 to the inlet 71, the sound being a part of noise leaking to the outside of the air intake division 81 through the inlet 71.

As denoted by a dash-dotted line arrow in Fig. 4, the airflow AF entering the first air intake subdivision 81A to be described later through the inlet 71 advances into a second air intake subdivision 81B while forming an approximately Z-shape or S-shape. This results in effectively reducing the noise attributed to the engine sound passing through the heat exchanger 40 and leaking to the outside through the inlet 71.

### [Fifth Feature]

In the working machine 1 having the fifth feature, as shown in Fig. 3 to Fig. 5, the cooling fan 20 is located in the engine division 82. The configuration having the fifth feature in which the cooling fan 20 is located in the engine division 82 in addition to the engine 30 achieves reduction in noise attributed to a sound from the cooling fan 20 passing through the heat exchanger 40 and leaking to the outside through the inlet 71 in addition to the reduction in the noise attributed to the engine sound passing through the heat exchanger 40 and leaking to the outside through the inlet 71.

### [Sixth Feature]

In the working machine having the sixth feature, the inlet 71 is located at a higher position than a rotary shaft 21 of the cooling fan 20. This configuration in which the inlet 71 is located at a higher position than the rotary shaft 21 of the cooling fan 20 allows the sound from the cooling fan 20 leaking out to the outside through the inlet 71 to advance obliquely upward.

### [Seventh Feature]

The working machine 1 having the seventh feature further includes a partition 90 that separates the air intake division 81 and the engine division 82 from each other. This configuration in which the partition 90 separates the air intake division 81 and the engine division 82 from each other achieves reduction in the engine sound passing through a region except the heat exchanger 40 and advancing toward the inlet 71. In the embodiment, as shown in Fig. 4 and Fig. 5, the partition 90 includes an upper partition section 90A that closes a gap between the heat exchanger 40 and the top wall part 13B of the outer wall 13, and a lower partition section 90B that closes a gap between the heat exchanger 40 and a floor surface (e.g., an upper surface of the slewing frame 3a). Besides, as shown in Fig. 3, the partition 90 may further include a side partition section 90C that closes a gap between the heat exchanger 40 and the side wall part 13A of the outer wall 13.

### [Eighth Feature]

In the working machine 1 having the eighth feature, as shown in Fig. 3 to Fig. 5, the air intake guide 50 includes the duct 55 located upstream of the heat exchanger 40 in the airflow AF. The duct 55 involves the heat exchanger-side upper wall 52. In this configuration, the air guided to the duct 55 along the inlet-side upper wall 51 is further guided by the duct 55 to effectively flow into the heat exchanger 40. As shown in Fig. 4, the inlet-side upper wall 51 and the duct 55 are made of different members from each other. This has a merit of easier forming of these two members.

The duct 55 is an annular member that involves the heat exchanger-side upper wall 52 that covers the second air intake subdivision 81B to be described later from above, a heat exchanger-side lower wall 56 that covers the second air intake subdivision 81B from below, a heat exchanger-side front wall 57 that covers the second air intake subdivision 81B from front, and a heat exchanger-side rear wall 58 that covers the second air intake subdivision 81B from rear.

### [Ninth Feature]

The working machine 1 having the ninth feature further includes, as shown in Fig. 3 to Fig. 5, a filter 85 located at the duct 55. The filter 85 is configured to divide the air intake division 81 into the first air intake subdivision 81A from the inlet 71 to the filter 85 and the second air intake subdivision 81B from the filter 85 to the heat exchanger 40. This configuration in which the filter 85 is located at the duct 55 allows air purified by the filter 85 to flow into the engine division 82.

### [Tenth Feature]

In the working machine 1 having the tenth feature, as shown in Fig. 3 to Fig. 5, the air intake guide 50 includes a lower wall 54 in a lower part of the first air intake subdivision 81A to guide the air to the second air intake subdivision 81B. This configuration smoothly guides, to the duct 55, the air flowing into the air intake division 81 through the inlet 71 and flowing in the lower part of the air intake division 81 along the lower wall 54. In the embodiment, the lower wall 54 further serves as a cover for the devices located below the lower wall.

### [Eleventh Feature]

In the working machine 1 having the eleventh feature, as shown in Fig. 2 and Fig. 3, the upper slewing body 3 has a rear right portion and a rear left portion forming a curved shape in a top view thereof, and a part of the inlet 71 is located at the rear left portion, and another part of the inlet 71 is located at a left portion (a left portion of the upper slewing body 3) extending forward and rearward. The location of the part of the inlet 71 at the rear left portion forming the curved shape in this manner makes it easier to ensure an enough opening area of the inlet 71 as denoted by dash-dotted lines in Fig. 3.

As shown in Fig. 4, an air cleaner 95 is located in the first air intake subdivision 81A. The air cleaner 95 purifies air in the first air intake subdivision 81A, and thereafter, supplies the purified air to the engine 30 through a pipe 95A. Moreover, a muffler 97 that receives supply of exhaust gas exhausted from the engine 30 is located in the engine division 82.

### [Modifications]

Heretofore, the embodiment of the disclosure is described, but the disclosure is not limited to the embodiment and includes, for example, the modifications described below.

### (A) Mesh Member

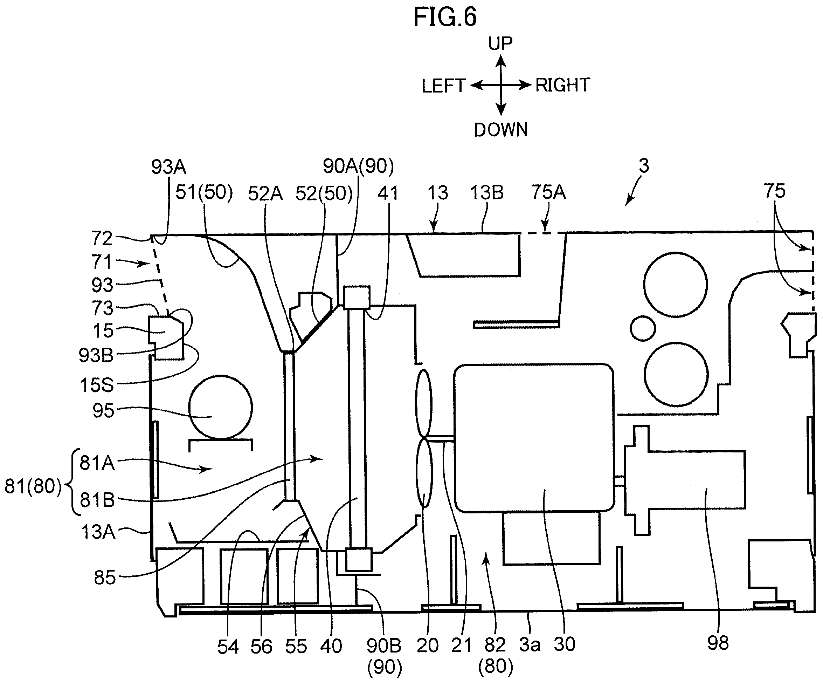

As shown in Fig. 6, a working machine 1 includes a mesh member 93 located at an inlet 71. The mesh member 93 has a posture of tilting with respect to a vertical direction with a lower end 93B of the mesh member 93 located downstream of an upper end 93A of the mesh member 93 in airflow AF. In this configuration, the mesh member 93 can catch a clump of dust when the air flows into the air intake division 81 through the inlet 71. Besides, the mesh member 93 having the posture tilting in the aforementioned manner allows the dust to come off the mesh member 93 under its own weight when an engine 30 stops.

### (B) Heat Exchanger-side Upper Wall

The heat exchanger-side upper wall 52 extends obliquely downward from the upper end 41 of the heat exchanger 40 to a lower position than the upper end 41 in the embodiment, but may obliquely extend downward from a member (e.g., the partition 90) connected to the upper end 41 of the heat exchanger 40 to a lower position than the upper end 41 of the heat exchanger 40.

### (C) Inlet-side Upper Wall

The inlet-side upper wall 51 extends obliquely upward from the lower end 52A of the heat exchanger-side upper wall 52 toward the inlet 71 while curving in a bow shape in the embodiment shown in Fig. 4 and Fig. 5, but, for example, may linearly extend obliquely upward from the lower end 52A of the heat exchanger-side upper wall 52 toward the inlet 71.

### (D) Inlet

In the embodiment shown in Fig. 4 and Fig. 5, the inlet 71 is located at only the side part of the air intake division 81. Specifically, although the inlet 71 is located at the side wall part 13A of the outer wall 13 and not located at the top wall part 13B, the location of the inlet is not limited thereto. In a working machine according to the disclosure, the inlet 71 may be located at a side part (the side wall part 13A) of the air intake division 81 and a part of the inlet 71 extends to a side end of the top wall part 13B.

### (E) Cooling Fan

The cooling fan 20 is located in the engine division 82 in the embodiment shown in Fig. 3 to Fig. 5, but may be located in the air intake division 81. In this configuration, the cooling fan 20 may be driven by a drive source other than the engine 30, and is configured to generate airflow F to advance in order of the inlet 71, the air intake division 81, and the engine division 82.

### (F) Partition

Although the partition 90 includes the upper partition section 90A, the lower partition section 90B, and the side partition section 90C in the embodiment shown in Fig. 3 to Fig. 5, at least one of the upper partition section 90A, the lower partition section 90B, and the side partition section 90C is excludable.

### (G) One Direction

Although the inlet 71, the heat exchanger 40, and the engine 30 align in the left-right direction (which is an example of the "one direction") in the left-right direction in a top view in the embodiment shown in Fig. 3, the arrangement is not limited to this specific example. The inlet 71, the heat exchanger 40, and the engine 30 may align in a front-rear direction (which is another example of the "one direction) in the top view, or may align in an oblique direction between the left-right direction and the front-rear direction.

Conclusively, the present disclosure provides a working machine that prevents a foreign matter from entering an air intake division while reducing noise attributed to an engine sound passing through a heat exchanger and leaking to an outside through an inlet.

A working machine according to a first aspect includes: a cooling fan that generates airflow to advance in order of an inlet, an air intake division, and an engine division; an engine located in the engine division; a heat exchanger disposed between the air intake division and the engine division; and an air intake guide that guides air flowing into the air intake division through the inlet to the heat exchanger. The air intake guide has a heat exchanger-side upper wall and an inlet-side upper wall. The heat exchanger-side upper wall is located upstream of the heat exchanger in the airflow, and extends obliquely downward from an upper end of the heat exchanger or from a member connected to the upper end to a lower position than the upper end. The inlet-side upper wall extends obliquely upward from a lower end of the heat exchanger-side upper wall toward the inlet.

In the working machine according to the first aspect, the heat exchanger-side upper wall and the inlet-side upper wall are disposed between an upper part of the heat exchanger and at least a part of the inlet. In this configuration, the heat exchanger-side upper wall and the inlet-side upper wall reduce an engine sound passing through the upper part of the heat exchanger. The air intake guide has the inlet-side upper wall as well as the heat exchanger-side upper wall. Thus, the configuration more reliably prevents a foreign matter, such as rainwater or dust, from entering the air intake division than a configuration in which a region corresponding to the inlet-side upper wall is opened upward. Therefore, the working machine makes it possible to prevent a foreign matter from entering the air intake division while reducing the noise attributed to the engine sound passing through the heat exchanger and the leaking to the outside through the inlet. Besides, in the working machine, the inlet-side upper wall and the heat exchanger-side upper wall smoothly guide the air flowing into the air intake division through the inlet to the heat exchanger.

The working machine according to a second aspect preferably further includes, in the working machine according to the first aspect, a configuration to be described below. Specifically, in the working machine according to the second aspect, preferably, the inlet-side upper wall is continuous from the lower end of the heat exchanger-side upper wall to an upper end of the inlet. In the second aspect, the inlet-side upper wall and the heat exchanger-side upper wall can cover the air intake division from above in an extent from the heat exchanger to the inlet, resulting in achievement in effectively preventing a foreign matter, such as rainwater or dust, from entering the air intake division.

The working machine according to a third aspect preferably further includes, in the working machine according to the first or second aspect, a configuration to be described below. Specifically, in the working machine according to the third aspect, preferably, the inlet is located at only a side part of the air intake division. The third aspect makes it possible to more effectively prevent a foreign matter, such as rainwater or dust, from entering the air intake division.

The working machine according to a fourth aspect preferably further includes, in the working machine according to any one of the first to third aspects, a configuration to be described below. Specifically, in the working machine according to the fourth aspect, preferably, the lower end of the heat exchanger-side upper wall is located at a lower position than a lower end of the inlet. The fourth aspect allows the engine sound leaking out to the outside through the inlet to advance obliquely upward.

The working machine according to a fifth aspect preferably further includes, in the working machine according to any one of the first to fourth aspects, a configuration to be described below. Specifically, in the working machine according to the fifth aspect, preferably, the cooling fan is located in the engine division. The fifth aspect in which the cooling fan is located in the engine division in addition to the engine achieves reduction in noise attributed to a sound from the cooling fan passing through the heat exchanger and leaking to the outside through the inlet in addition to the reduction in the noise attributed to the engine sound passing through the heat exchanger and leaking to the outside through the inlet.

The working machine according to a sixth aspect preferably further includes, in the working machine according to any one of the first to fifth aspects, a configuration to be described below. Specifically, in the working machine according to the sixth aspect, preferably, the inlet is located at a higher position than a rotary shaft of the cooling fan. The sixth aspect in which the inlet is located at the higher position than the rotary shaft of the cooling fan allows the sound from the cooling fan leaking out to the outside through the inlet to advance obliquely upward.

The working machine according to a seventh aspect preferably further includes, in the working machine according to any one of the first to sixth aspects, a configuration to be described below. Specifically, the working machine according to the seventh aspect preferably further includes a partition that separates the air intake division and the engine division from each other. The seventh aspect in which the partition separates the air intake division and the engine division from each other achieves reduction in the engine sound passing through a region except the heat exchanger and advancing toward the inlet.

The working machine according to an eighth aspect preferably further includes, in the working machine according to any one of the first to seventh aspects, a configuration to be described below. Specifically, in the working machine according to the eighth aspect, the air intake guide may include a duct located upstream of the heat exchanger in the airflow, and the duct may involve the heat exchanger-side upper wall. In the eighth aspect, the air guided to the duct along the inlet-side upper wall is further guided by the duct to effectively flow into the heat exchanger. In the eighth aspect, the inlet-side upper wall and the duct may be made of different members from each other. This configuration has a merit of easier forming of these two members.

The working machine according to a ninth aspect preferably further has, in the working machine according to the eighth aspect, a configuration to be described below. Specifically, the working machine according to the ninth aspect preferably includes a filter located at the duct. The filter is preferably configured to divide the air intake division into a first air intake subdivision from the inlet to the filter and a second air intake subdivision from the filter to the heat exchanger. The ninth aspect in which the filter is located at the duct allows air purified by the filter to flow into the engine division.

The working machine according to a tenth aspect preferably further includes, in the working machine according to the ninth aspect, a configuration to be described below. Specifically, in the working machine according to the tenth aspect, preferably, the air intake guide includes a lower wall in a lower part of the first air intake subdivision to guide the air to the second air intake subdivision. The configuration of the tenth aspect smoothly guides, to the duct, the air flowing into the air intake division through the inlet and flowing in the lower part of the air intake division along the lower wall.

The working machine according to an eleventh aspect preferably further includes, in the working machine according to any one of the first to tenth aspects, a configuration to be described below. Specifically, in the working machine according to the eleventh aspect, preferably, an upper slewing body included in the working machine has a rear right portion and a rear left portion forming a curved shape in a top view thereof, and at least a part of the inlet is located at the rear right portion or the rear left portion. In the eleventh aspect, at least a part of the inlet is located at the rear right portion or the rear left portion forming the curved shape. The configuration thus makes it easier to ensure an enough opening area of the inlet.

The working machine according to a twelfth aspect preferably further includes, in the working machine according to any one of the first to eleventh aspects, a configuration to be described below. Specifically, the working machine according to the twelfth aspect preferably further includes a mesh member located at the inlet. The mesh member preferably has a posture of tilting with respect to a vertical direction with a lower end of the mesh member located downstream of an upper end of the mesh member in the airflow. In the twelfth aspect, the mesh member can catch a clump of dust when the air flows into the air intake division through the inlet. Besides, the mesh member having the posture tilting in the aforementioned manner allows the dust to come off the mesh member under its own weight when the engine stops.

## Claims

1. A working machine, comprising:
a cooling fan that generates airflow to advance in order of an inlet, an air intake division, and an engine division;
an engine located in the engine division;
a heat exchanger disposed between the air intake division and the engine division; and
an air intake guide that guides air flowing into the air intake division through the inlet to the heat exchanger, wherein
the air intake guide has a heat exchanger-side upper wall and an inlet-side upper wall,
the heat exchanger-side upper wall is located upstream of the heat exchanger in the airflow, and extends obliquely downward from an upper end of the heat exchanger or from a member connected to the upper end to a lower position than the upper end, and
the inlet-side upper wall extends obliquely upward from a lower end of the heat exchanger-side upper wall toward the inlet.

2. The working machine according to claim 1, wherein the inlet-side upper wall is continuous from the lower end of the heat exchanger-side upper wall to an upper end of the inlet.

3. The working machine according to claim 1 or 2, wherein the inlet is located at only a side part of the air intake division.

4. The working machine according to any one of claims 1 to 3, wherein the lower end of the heat exchanger-side upper wall is located at a lower position than a lower end of the inlet.

5. The working machine according to any one of claims 1 to 4, wherein the cooling fan is located in the engine division.

6. The working machine according to any one of claims 1 to 5, wherein the inlet is located at a higher position than a rotary shaft of the cooling fan.

7. The working machine according to any one of claims 1 to 6, further comprising a partition that separates the air intake division and the engine division from each other.

8. The working machine according to any one of claims 1 to 7, wherein the air intake guide includes a duct located upstream of the heat exchanger in the airflow, and
the duct involves the heat exchanger-side upper wall.

9. The working machine according to claim 8, further comprising a filter located at the duct, wherein
the filter is configured to divide the air intake division into a first air intake subdivision from the inlet to the filter and a second air intake subdivision from the filter to the heat exchanger.

10. The working machine according to claim 9, wherein the air intake guide includes a lower wall in a lower part of the first air intake subdivision to guide the air to the second air intake subdivision.

11. The working machine according to any one of claim 1 to 10, wherein an upper slewing body included in the working machine has a rear right portion and a rear left portion forming a curved shape in a top view thereof, and
at least a part of the inlet is located at the rear right portion or the rear left portion.

12. The working machine according to any one of claims 1 to 11, further comprising a mesh member located at the inlet, wherein
the mesh member has a posture of tilting with respect to a vertical direction with a lower end of the mesh member located downstream of an upper end of the mesh member in the airflow.
